Europäisches Patentamt

European Patent Office

Office européen des brevets

(19)

(11) Numéro de publication: **0 302 928 B1**

## (12) FASCICULE DE BREVET EUROPEEN

(45) Date de publication du fascicule du brevet: **23.01.91**

(21) Numéro de dépôt: **88902152.3**

(22) Date de dépôt: **25.02.88**

(86) Numéro de dépôt international:
**PCT/FR88/00107**

(87) Numéro de publication internationale:
**WO 88/06477 07.09.88 Gazette 88/20**

(51) Int. Cl.⁵: **B 01 D 61/14,** B 01 D 69/10,
B 01 D 71/02, B 01 D 71/06,
B 01 D 67/00, C 07 K 1/14,
A 23 J 1/20

## (54) MEMBRANE DE FILTRATION INORGANIQUE MODIFIEE POUR LA SEPARATION DE PROTEINES.

(30) Priorité: **26.02.87 FR 8702574**

(43) Date de publication de la demande:
**15.02.89 Bulletin 89/07**

(45) Mention de la délivrance du brevet:
**23.01.91 Bulletin 91/04**

(84) Etats contractants désignés:
**AT BE CH DE FR GB IT LI**

(56) Documents cités:
**EP-A-0 022 696**
**EP-A-0 040 282**
**EP-A-0 175 668**
**EP-A-0 190 558**
**EP-A-0 232 442**
**EP-A-0 250 327**
**FR-A-2 388 583**
**FR-A-2 424 756**
**US-A-3 061 518**
**US-A-4 125 462**

(73) Titulaire: **TECH-SEP**
**25 quai Paul Doumer**
**F-92408 Courbevoie (FR)**

(73) Titulaire: **ELECTRICITE DE FRANCE Service**
**National**
**2, rue Louis Murat**
**F-75008 Paris (FR)**

(72) Inventeur: **CHAUFER, Bernard**
**48 bis, avenue Ambroisine**
**F-94500 Champigny-sur-Marne (FR)**
Inventeur: **DULIEU, Jacqueline**
**13, rue de Lorraine**
**F-92240 Malakoff (FR)**
Inventeur: **SEBILLE, Bernard**
**45 bis, rue Paul-Louvier**
**F-92140 Clamart (FR)**

(74) Mandataire: **Des Termes, Monique et al**
**Société Brevatome 25, rue de Ponthieu**
**F-75008 Paris (FR)**

Courier Press, Leamington Spa, England.

EP 0 302 928 B1

## Description

La présente invention a pour objet des membranes d'ultrafiltration ou de microfiltration utilisables en particulier pour la séparation des protéines.

De façon plus précise, elle s'applique aux membranes comportant une couche séparatrice en matériau organique microporeux, par exemple aux membranes constituées par un support macroporeux revêtu d'une couche microporeuse conférant à la membrane les caractéristiques de séparation souhaitée. Dans ce cas, le support macroporeux peut être réalisé en différents matériaux inorganiques, par exemple en carbone ou en oxyde métallique. La couche microporeuse peut être constituée par un ou plusieurs oxydes métalliques, par exemple la zircone, l'alumine ou les spinelles d'alumine, par des carbures, des fluorures etc.

Bien que des membranes d'ultrafiltration ou de microfiltration inorganiques présentent des caractéristiques satisfaisantes pour un grand nombre de séparations, on recherche encore à améliorer les performances de séparation de telles membranes et éventuellement leur sélectivité, notamment en vue d'une utilisation pour la séparation des protéines.

Les procédés de séparation en phase liquide utilisant des membranes et faisant appel aux techniques d'osmose inverse, d'électrodialyse, d'ultrafiltration, etc. ont été largement étudiés ces dernières années. Les membranes utilisées peuvent être en matériau organique ou en matériau inorganique. Des membranes organiques pour la désionisation des liquides par osmose inverse sont décrites, par exemple, dans les brevets FR—A—2 388 583 et US—A—4 125 462. Dans ces brevets, on utilise des membranes organiques que l'on revêt d'une couche de polyélectrolyte chargé tel qu'un polymère hydrophile chargé, pour leur conférer la propriété de repousser certains ions tels que les cations. Dans ce cas, la couche de polyélectrolyte cationique polymère doit avoir une masse moléculaire élevée, par exemple supérieure à 100 000, et de préférence supérieure à 500 000, pour obtenir les propriétés souhaitées de rejet des ions.

Pour la séparation des protéines par ultrafiltration, on peut utiliser des membranes inorganiques ou organiques comme il est décrit dans le brevet européen EP—A—0 022 696, ou des membranes en polymères organiques comme il est décrit dans le brevet européen EP—A—0 190 558.

Lorsqu'on utilise des membranes en polymères organiques, ceci pose des problèmes pour réaliser une séparation à l'échelle industrielle car ces membranes en polymère ont généralement des performances mécaniques insuffisantes. Aussi, il est préférable d'utiliser des membranes inorganiques qui présentent des propriétés mécaniques supérieures.

Cependant, l'emploi de membranes inorganiques pose d'autres problèmes car la couche séparatrice de ces membranes qui sont souvent à base d'oxyde, n'est pas totalement inerte. En effet, celle-ci a été obtenue à partir de particules finement divisées très actives et elle possède encore des charges superficielles, ce qui la rend sensible aux sels minéraux. Aussi, en fonctionnement, il peut se produire un colmatage des pores les plus fins par des sels minéraux.

L'invention a précisément pour objet une membrane inorganique utilisable pour la séparation des protéines, qui est aussi efficace que les membranes organiques sans être sensible à l'action des sels minéraux, et qui présente par ailleurs de meilleures propriétés mécaniques et dans certains cas une sélectivité améliorée pour la séparation des protéines.

La membrane inorganique d'ultrafiltration ou de microfiltration de l'invention comporte une couche séparatrice en matériau inorganique et elle se caractérisé en ce qu'elle comprend, avant d'être utilisée pour une opération d'ultrafiltration ou de microfiltration, au moins un polymère ou copolymère hydrophile ayant une masse moléculaire au plus égale à $10^5$, adsorbé sur ou dans la couche séparatrice de la membrane inorganique en vue d'en modifier les propriétés séparatrices.

Dans la membrane de l'invention, le polymère hydrophyle ayant une masse moléculaire inférieure à $10^5$ qui est adsorbé sur ou dans la couche séparatrice de la membrane inorganique, permet de neutraliser les charges résiduelles de cette couche séparatrice et de la rendre insensible au colmatage par les sels minéraux. Par ailleurs, le choix d'un polymère ou copolymère hydrophile approprié permet de modifier les conditions de transfert des protéines à travers la membrane d'ultrafiltration ou de microfiltration, et de faire varier certains propriétés de la membrane comme sa sélectivité vis-à-vis des solutés, sont débit de perméation ou son taux de rejet d'un ou plusieurs solutés.

L'utilisation d'un polymère ou copolymère hydrophile ayant une masse moléculaire au plus égale à $10^5$, et de préférence de $10^4$ à $10^5$, permet au polymère de pénétrer dans les pores de la membrane pour en modifier les propriétés.

On obtient ainsi une membrane d'ultrafiltration qui possède les propriétés mécaniques de la membrane inorganique et des propriétés séparatrices améliorées.

Par ailleurs, après avoir utilisé de telles membranes pour l'ultrafiltration, on peut les régénérer en réalisant des lavages à l'eu et/ou par des solutions alcalines et acides, à la température ambiante, alors que dans le cas de membranes inorganiques, non modifiées conformément à l'invention, il est nécessaire d'effecteur les opérations de lavage à une température de 80°C pour retrouver la perméabilité initiale.

On précise que l'on entend par polymère ou copolymère hydrophile, un polymère ou copolymère qui comporte des groupes ayant une affinité pour l'eau. On précise par ailleurs que dans la suite du texte on utilisera la terme ''polymère'' pour désigner à la fois les homopolymères et les copolymères.

Selon l'invention, les polymères hydrophiles utilisés peuvent être constitués en particulier par des polymères comportant des fonctions amide ou des fonctions amine.

Lorsqu'on utilise des polymères à fonctions amide, celles-ci sont de préférence, des fonctions amide N-disubstituées; à titre d'exemple de tels polymères, on peut citer la polyvinylpyrrolidone et les dérivés disubstitués des polyacrylamides et polyméthacrylamides.

Les polymères hydrophiles comportant des fonctions amine peuvent être constitués par exemple par le polyvinylimidazole, la polyvinylamine, la polyéthylène imine et les polymères qui ont été fonctionnalisés de façon à comporter des groupes amines, comme les polymères obtenus à partir d'acides et d'esters polyacryliques (ou polyméthacryliques) ou de polyacrylamides qui ont été fonctionnalisés par réaction avec l'éthylène damine, avec des polyéthylèneamines comme la tétraéthylènepentamine et la triéthylènetétramine, avec la diéthanolamine ou avec des dérivés de l'acide N-iminodiacétique.

Lorsqu'on utilise des polymères hydrophiles à fonction amine, on peut aussi quaterniser ces fonctions amine pour former des polymères cationiques qui dans certains cas peuvent être plus intéressants que les polymères de départ.

Les membranes d'ultrafiltration ou de microfiltration en matériau inorganique utilisées dans l'invention peuvent être de différents types; toutefois, on préfère généralement des membranes constituées par un support macroporeux inorganique sur lequel est déposée une couche microporeuse inorganique. Le support macroporeux peut être réalisé par exemple en carbone ou en oxyde métallique tel que l'alumine, et la couche microporeuse peut être réalisée en oxyde métallique, par exemple en alumine au en zirone, en carbure métallique, en fluorure métallique ou encore en spinelle. Les propriétés séparatrices de ces membranes d'ultrafiltration sont ainsi conditionnées par les caractéristiques de porosité et de perméabilité de la couche microporeuse, et selon l'invention, on améliore ces propriétés en modifiant la surface de la couche microporeuse par adsorption d'un polymère hydrophile.

Généralement, pour obtenir une amélioration sensible des propriétés de la membrane d'ultrafiltration ou de microfiltration, la quantité de polymère et/ou de copolymère hydrophiles adsorbée est d'environ 10 à 400 µg par cm$^2$ de membrane.

Pour caractériser la modification obtenue, on peut effectuer une mesure de débit à l'eau sur la membrane inorganique d'ultrafiltration non modifiée et une mesure de débit à l'eau sur cette membrane après adsorption du polymère ou copolymère hydrophile. Ces mesures effectuées sous une pression de 4 bars (0,4 MPa) à 25°C donnent le débit de l'eau DE avant adsorption du copolymère et le débit à l'eau DE' après adsorption. On sait que ce débit, à pression fixée, dépend du rayon de pore moyen à la puissance 4 selon la loi de Poiseuille. A titre d'exemple, avec des membranes inorganiques ayant par exemple un rayon moyen de pore $\bar{r}$ de l'ordre de 7,5 à 10 mm (75 à 100 Angströms) et des débits à l'eau avant adsorption du polymère hydrophile de 300 à 800 l/h · m$^2$, le rapport DE'/DE est de 0,5 à 0,7, ce qui signifie que le rayon moyen de pore $\bar{r}'$ de la membrane inorganique après adsorption est plus faible que $\bar{r}$, le rapport $\bar{r}'/\bar{r}$ étant de 0,84 à 0,91.

L'invention a également pour objet un procédé de préparation d'une membrane d'ultrafiltration modifiée par un polymère ou copolymère hydrophile.

Ce procédé consiste à mettre en contact la couche séparatrice en matériau inorganique d'une membrane inorganique d'ultrafiltration ou de microfiltration avec une solution d'au moins un polymère ou copolymère hydrophile ayant une masse moléculaire au plus égale à 10$^5$, pendant une durée suffisante pour adsorber le polymère ou le copolymère hydrophile sur ou dans la couche séparatrice de la membrane inorganique.

En effet, comme on l'a vu précédemment, le polymère ou copolymère hydrophile adsorbé sur ou dans la couche séparatrice ne doit pas colmater les pores de plus petite taille de la couche séparatrice en matériau inorganique, c'est pourquoi on utilise un polymère ou copolymère hydrophile ayant une masse moléculaire au plus égale à 10$^5$.

Généralement, pour faciliter l'adsorption du polymère hydrophile dans les pores superficiels de la membrane d'ultrafiltration, on conditionne tout d'abord celle-ci dans un solvant, de préférence identique à celui qui sera utilisé ensuite pour fabriquer la solution de polymère ou copolymère hydrophile. Ceci permet de saturer la membrane inorganique par le solvant et de faciliter ensuite l'adsorption du polymère hydrophile.

A titre d'exemple de solvants susceptibles d'être utilisés, on peut citer le méthanol et l'eau.

Après l'opération de mise en contact de la membrane d'ultrafiltration avec la solution de polymère hydrophile, on soumet la membrane traitée à un rinçage qui peut être effectué avec différents solvants. Le but de cette opération est d'éliminer le polymère adsorbé de façon réversible sur la membrane inorganique. Ce rinçage peut être effectué par exemple tout d'abord au moyen de méthanol, puis au moyen d'eau.

Les étapes d'adsorption du polymère hydrophile et de rinçage peuvent être effectuées par des moyens classiques. Ainsi, lorsque la membrane d'ultrafiltration est de forme tubulaire, on peut mettre en circulation à l'intérieur du tube la solution du polymère hydrophile, et effectuer le rinçage de la même façon en appliquant la même pression de part et d'autre de la paroi du tube.

Dans ce procédé, les débits de circulation de la solution, les concentrations en polymère de la solution et la durée de mise en contact sont choisis en fonction de la nature de la membrane inorganique et du polymère utilisés de façon à obtenir le taux d'adsorption souhaité.

Les isothermes d'adsorption obtenus à partir des polymères généralement utilisés montrent que ceux- ci ont une haute affinité pour les membranes inorganiques et que l'équilibre d'adsorption peut être atteint très rapidement.

Les membranes d'ultrafiltration ou de microfiltration inorganique modifiées par un polymère hydrophile conforme à l'invention peuvent être utilisées pour la séparation de protéines par ultrafiltration.

Ces protéines peuvent être en particulier les protéines du lactosérum comme la bêta-lactoglobuline et l'alpha-lactalbumine, la sérum albumine de boeuf et le lysozyme.

Pour réaliser ces séparations, on met en circulation la solution de protéines à séparer le long de la face de la membrane sur laquelle est adsorbé le polymère ou copolymère hydrophile et on recueille de l'autre côté de la membrane soit une solution dépourvue de protéines, soit une solution enrichie en certaines protéines de la solution de départ. Dans le cas du lactosérum, l'utilisation de membranes inorganiques modifiées par des polymères hydrophiles tels que la polyvinylpyrrolidone, permet d'obtenir une solution très enrichie en lactalbumine dans le perméat.

Les installations susceptibles d'être utilisées pour réaliser ces séparations de protéines sont des installations classiques telles que celles habituellement utilisées pour l'ultrafiltration.

D'autres caractéristiques et avantages de l'invention apparaîtront mieux à la lecture de la description qui suit d'exemples donnés bien entendu à titre illustratif et non limitatif, en référence aux dessins annexés sur lesquels:

—la figure 1 représente de façon schématique une installation d'ultrafiltration;

—la figure 2 est un diagramme représentant l'évolution du débit d'ultrafiltration (en ml/min) en fonction du temps (en min) lors de l'ultrafiltration de lactosérum au moyen de membranes de l'invention;

—la figure 3 est un diagramme représentant l'évolution du taux de rejet (en %) de l'alpha lactalbumine en fonction du temps (en min) lors de l'ultrafiltration de lactosérum en utilisant des membranes de l'invention;

—la figure 4 représente l'évolution du taux de rétention de l'alpha-lactalbumine en fonction du temps lors de l'ultrafiltration du lactosérum au moyen d'une membrane de l'invention;

—la figure 5 représente l'évolution du débit de perméat $DUF/DE_P$ en fonction du temps lors de l'ultrafiltration de lactosérum au moyen d'une membrane de l'invention;

—la figure 6 est un diagramme représentant l'évolution des débits d'ultrafiltration en fonction du temps (en min) lors de l'ultrafiltration d'une solution de sérum albumine de boeuf au moyen de membranes selon l'invention;

—la figure 7 est un diagramme représentant l'évolution du taux de rejet (en %) de la sérum albumine de boeuf en fonction du temps (en min) pour différentes membranes selon l'invention;

—la figure 8 est un diagramme représentant l'évolution du taux de rejet (en %) du lysozyme en fonction du temps (en min) avec une membrane selon l'invention;

—la figure 9 est un diagramme représentant l'évolution du débit d'ultrafiltration (en ml/min) en fonction du temps (en min) lors de l'ultrafiltration d'une solution de lysozyme avec une membrane de l'invention; et

—les figures 10 et 11 sont des diagrammes donnant les débits à l'eau de membranes de l'invention soumises à plusieurs traitements de régénération après différentes opérations d'ultrafiltration.

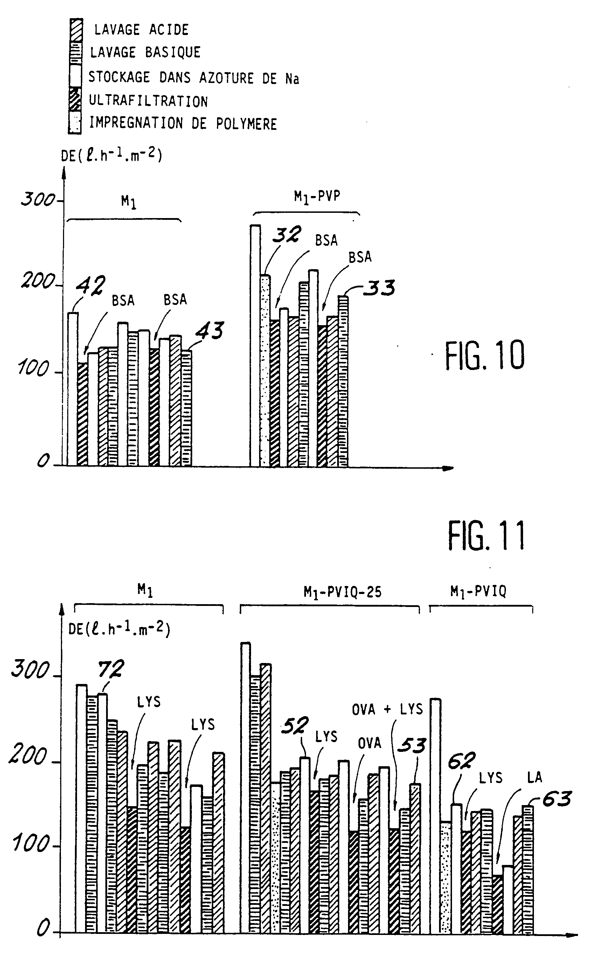

Sur les figures 10 et 11, les symboles utilisés ont la signification suivante:

| | |
|---|---|
| —BSA: | sérum albumine bovine, |
| —LYS: | lysozyme, |
| —OVA: | ovalbumine, |
| —PVIQ: | polyvinylimidazole quaternisé, |
| —PVIQ25: | copolymère vinylpyrrolidone-vinylimidazole (75/25) quaternisé, |
| —LA: | lactosérum doux (20 g/l). |

Exemple 1

Dans cet exemple, on prépare une membrane d'ultrafiltration modifiée par la polyvinylpyrrolidone (PVP).

On part d'une membrane d'ultrafiltration tubulaire $M_1$ en carbone poreux revêtu intérieurement d'une couche microporeuse de $ZrO_2$ capable de retenir des composés chimiques ayant une masse moléculaire supérieure à 70 000 daltons. Le tube a une longueur de 1,20 m et un diamètre interne de 0,6 cm; le rayon de pores moyen de la couche microporeuse est de l'ordre de 5 nm et sa perméabilité à l'eau est de $50\,l \cdot h^{-1} \cdot m^{-2}\,bar^{-1}$.

On fait circuler dans le tube du méthanol pour saturer la couche microporeuse. Après avoir vidé le méthanol pour saturer la couche microporeuse. Après avoir vidé le méthanol, on met en circulation à l'intérieur du tube 150 ml d'une solution de PVP dans du méthanol contenant 0,108 g/l de polyvinylpyrrolidone et l'on fait circuler la solution dans le tube à un débit de 75 ml/min pendant environ une 1/2 heure, en recyclant à l'entrée du tube la solution sortant du tybe, y compris le perméat, c'est-à-dire la solution qui a diffusé au travers de la paroi du tube. On précise que pour cette opération d'adsorption, la pression de part et d'autre de la paroi du tube est la pression atmosphérique.

Après cette opération, on rince le tube deux fois avec du méthanol pur, puis deux fois avec de l'eau pure en utilisant pour chaque rinçage 75 ml de méthanol ou d'eau que l'on met en circulation à l'intérieur du tube comme précédemment à un débit de 75 ml/min pendant 1/4 heure.

En fin d'opération, on détermine la quantité de polyvinylpyrrolidone adsorbée à partir des mesures de la teneur en polyvinylpyrrolidone des solutions recueillies, y compris les perméats, après les opérations d'adsorption et de rinçage. Les résultats sont donnés dans le tableau 1 annexé.

On observe ainsi que 3 mg de polyvinylpyrrolidone ont été adsorbés de façon irréversible sur le tube, ce qui correspond à 13,6 µg/cm² de surface du tube.

Exemple 2

On répète le mode opératoire de l'exemple 1, mais la membrane de départ $M_1$ est un tube de 15 cm de longueur et de 0,6 cm de diamètre interne. On réalise l'adsorption comme dans l'exemple 1 mais en utilisant 50 ml d'une solution de PVP dans du méthanol contenant 0,101 g/l de PVP. On réalise ensuite les opérations de rinçage dans les mêmes conditions que celles de l'exemple 1 sauf que l'on utilise 50 ml de méthanol ou d'eau pour chaque rinçage. On détermine aussi comme dans l'exemple 1 les teneurs en PVP des solutions recueillies, y compris les perméats. Les résultats sont donnés dans le tableau 1.

On remarque ainsi que la quantité de polyvinylpyrrolidone adsorbée de façon irréversible est de 0,19 mg, ce qui correspond à 7 µg/cm² de surface de tube.

Exemple 3

On répète les opérations d'adsorption et de rinçage de l'exemple 2 mais en utilisant comme membrane de départ la membrane $M_1$ modifiée par de la polyvinylpyrrolidone obtenue à la fin de l'exemple 2.

On détermine également les teneurs en PVP des solutions recueillies, y compris les perméats, après adsorption et après rinçages. Les résultats obtenus sont donnés dans le tableau 1.

Au vu de ces résultats, on remarque que la quantité de PVP adsorbée de façon réversible, avant les opérations de rinçage, est pratiquement égale à celle qui avait été adsorbée dans l'exemple 2. En revanche, la quantité adsorbée de façon irréversible est beaucoup plus faible car on se rapproche des conditions de saturation de la couche microporeuse. Dans le tableau 1, on a indiqué (Ex. 2+3) les quantités totales de PVP adsorbées à la suite des deux opérations d'adsorption consécutives.

Exemple 4

On répète le mode opératoire de l'exemple 1, mais en utilisant une membrane d'ultrafiltration tubulaire $M_4$ en carbone poreux revêtu d'une couche d'oxyde de zirconium microporeuse, capable de retenir des composés ayant une masse moléculaire supérieure à 20 000 daltons. Cette membrane $M_4$ est comme celle de l'exemple 1 sous la forme d'un tube de 1,20 m⁴ de longueur et de 0,6 cm de diamètre interne.

On réalise les opérations d'adsorption dans les mêmes conditions que celles de l'exemple 1 mais en utilisant une solution contenant 0,098 g/l de PVP dans du méthanol. On détermine les teneurs en polyvinylpyrrolidone de la solution recuellie après adsorption, y compris le perméat. Les résultats obtenus sont donnés dans le tableau 1.

Au vu de ce résultat, on constate que la quantité de PVP adsorbée est plus importante, ce qui s'explique par les caractéristiques de porosité de la membrane de départ.

Exemple 5

On répète le mode opératoire de l'exemple 1, en utilisant pour l'opération d'adsorption, une solution de méthanol contenant 30 g/l de polyvinylpyrrolidone.

Exemple 6

On répète le mode opératoire de l'exemple 1, en utilisant pour l'opération d'adsorption, une solution de méthanol contenant 30 g/l de polyvinylimidazole.

Exemple 7

On répète le mode opératoire de l'exemple 6 afin d'obtenir une membrane tubulaire $M_1$ modifiée par adsorption de polyvinylimidazole PVI. On soumet ensuite la membrane à un traitement par une solution d'épichlorhydrine à 10% en volume dans le méthanol pendant 1 h 30 à 40°C pour qauterniser les groupes amine de la membrane.

Exemple 8

Ultrafiltration du lactosérum doux

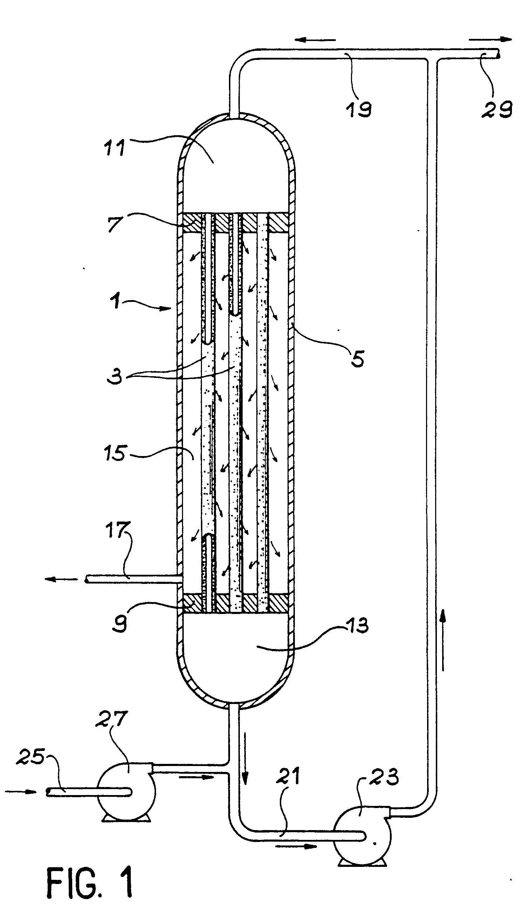

Dans cet exemple, on utilise l'installation d'ultrafiltration représentée de façon schématique sur la figure 1.

Cette installation comporte un module d'ultrafiltration 1 constitué par un ensemble de tubes 3 disposés longitudinalement dans une enceinte 5 entre deux plaques à tubes 7 et 9 qui délimitent dans l'enceinte 5 une chambre d'introduction 11 de la solution à traiter, une chambre de sortie 13 de la solution traitée et une chambre de réception 15 du perméat qui peut être évacué de l'installation par la conduite 17.

La solution à traiter peut être amenée dans le module d'ultrafiltration 1 par la conduite 19. A la sortie du module d'ultrafiltration, la solution peut être évacuée de l'installation, par la conduite 21 munie d'une pompe 23 qui permet de recycler la solution à l'entrée du module d'ultrafiltration 1. Un apport de solution à traiter est amené par la conduite 25 munie de la pompe 27 et l'on peur évacuer une partie de la solution traitée par la conduite 29.

Dans ce dispositif, les tubes 3 du module d'ultrafiltration 1 sont constitués par les membranes microporeuses qui ont été modifiées par un polymère ou copolymère hydrophile conformément à l'invention.

Sur le dessin, on a représenté un module dans lequel on fait circuler la solution à l'intérieur des tubes, mais l'on pourrait aussi bien faire circuler la solution à l'extérieur des tubes, et dans ce cas, les tubes auraient été modifiés de façon que la couche séparatrice en $ZrO_2$ soit à l'extérieur du tube et que le polymère hydrophile soit adsorbé sur la surface externe des tubes.

Dans cet exemple, on utilise des tubes 3 constitués par les tubes $M_1$-PVP obtenus dans l'exemple 5 pour réaliser l'ultrafiltration du lactosérum doux qui est un mélange de protéines naturelles comprenant notamment de la bêta lactoglobuline et de l'alpha lactalbumine.

Ainsi, on met en circulation dans le tube 3 par l'intermédiaire des pompes 27 et 23 et des conduites 21 et 19 du lactosérum qui est une solution à 20 g d'extrait sec comprenant 1,05 g/l de bêta lactoglobuline et 0,305 g/l d'alpha lactalbumine.

Le débit de circulation dans chaque tube 3 du module est de 500 l/h et la solution sortant des tubes est recyclée. La pression appliquée dans les tubes est de 4 bars (0,4 MPa) alors que la chambre 15 est à la pression atmosphérique, et l'on opère à une température de 25°C. On réalise cette opération pendant 200 min au minimum et on détermine en cours d'opération le débit de l'ultrafiltrat (ou perméat) évacué par la conduite 17. Les résultats obtenus sont donnés dans le tableau 2 où l'on a indiqué également quels sont les débits d'eau (sous 0,4 MPa à 25°C) à travers les tubes 3 lorsqu'ils sont constitués par une membrane $M_1$ non modifiée (exemple $C_1$), ou par une membrane $M_1$ modifiée, en déterminant dans les deux cas les débits à l'eau $DE_0$ avant dépôt du polymère, $DE_P$ après dépôt du polymère pour l'exemple 1 seulement, et $DE_f$ après ultrafiltration, dans les deux cas.

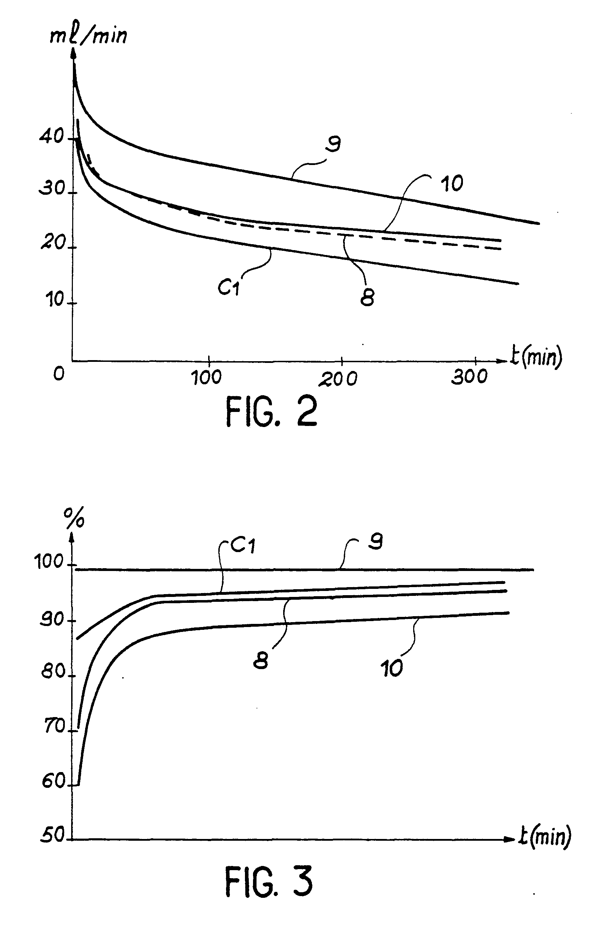

Pendant l'opération d'ultrafiltration du lactosérum, on détermine aussi périodiquement les débits d'ultrafiltration. Les résultats obtenus sont donnés sur la figure 2 qui représente le débit d'ultrafiltration (en ml/min) en fonction du temps (en min). Sur cette figure, la courbe 8 se rapporte aux résultats obtenus dans l'exemple 8, la courbe $C_1$ aux résultats obtenus dans l'exemple $C_1$. On constate que le débit d'ultrafiltration décroît en fonction du temps, mais qu'il est plus élevé pour la membrane $M_1$ modifiée par PVP.

Pendant l'opération d'ultrafiltration, on mesure également la teneur en alpha lactalbumine du perméat, ce qui permet de déterminer le taux R de rejet (en %) de l'alpha lactalbumine qui correspond au rapport de la teneur en alpha lactalbumine de la solution sortant du module sur la teneur en alpha lactalbumine du lactosérum de départ multiplié par 100, (en fonction du temps).

Les résultats obtenus sont donnés sur la figure 2 qui est un diagramme représentant l'évolution du taux de rejet (en %) de l'alpha lactalbumine en fonction du temps (en min).

Sur cette figure 3, la courbe $C_1$ se réfère aux résultats obtenus avec la membrane $M_1$ non modifiée par la polyvinylpyrrolidone et la courbe 8 se rèfère à la membrane $M_1$-PVP.

On remarque ainsi que la présence de polyvinylpyrrolidone permet d'obtenir au départ un taux non négligeable d'alpha lactalbumine dans le perméat et que cet effet est moins fort avec la membrane $M_1$ non modifiée.

Une analyse chromatographique du perméat a montré que le perméat ne contenait pas de β-lactoglobuline car le pic correspondant à la β-lactoglobuline disparait dans le perméat. Cette analyse chromatographique a été effectuée sur une colonne Superose 12 de Pharmacia en utilisant pour l'élution un tampon phosphate $5 \cdot 10^{-2}$ M, à pH 7, avec un débit de 0,7 ml/min et en réalisant la détection à 280 nm.

Ainsi, la membrane $M_1$-PVP permet de séparer l'α-lactalbumine de la β-lactoglobuline et d'obtenir des perméats enrichis en α-lactalbumine.

Exemple 9

Dans cet exemple, on utilise la membrane d'ultrafiltration modifiée par de la PVP obtenue dans l'exemple 4 pour l'ultrafiltration du lactosérum doux. On part d'un lactosérum à 6 g/l d'extrait set et on réalise l'ultrafiltration dans les mêmes conditions que celles de l'exemple 8 pendant 360 min. Les résultats obtenus sont donnés dans le tableau 2 et sur les figures 2 et 3 où les courbes 9 se rapportent à cet exemple 9.

Au vu de ces résultats, on constate que la membrane de type $M_4$ qui retient des molécules de masse moléculaire plus faible que la membrane de type $M_1$, retient totalement l'alpha lactalbumine, mais que le débit d'ultrafiltration est supérieur à celui que l'on obtient avec la membrane $M_1$ non modifiée ($C_1$) et la membrane $M_1$ modifiée PVP (courbe 8).

Exemple 10

Dans cet exemple, on utilise la membrane de l'exemple 6 pour réaliser l'ultrafiltration du lactosérum doux.

Dans cet exemple, on utilise le même mode opératoire que dans l'exemple 8 et les résultats obtenus sont donnés dans le tableau 2 et sur les figures 2 et 3 où les courbes 10 se réfèrent à l'exemple 10. Au vu de ces courbes, on constate que le taux de rejet de l'alpha lactalbumine est moins élevé avec la membrane de l'exemple 10 et que le débit d'ultrafiltration est sensiblement le même que celui obtenu dans l'exemple 8 avec la membrane $M_1$ modifiée par PVP.

De même, une analyse par chromatographie du perméat montre que celui-ci ne contient pas de β-lactoglobuline.

Ainsi, les membranes de type $M_1$ modifiées par dépôt de polyvinylpyrrolidone, et surtout de polyvinylimidazole facilitent le transfert de l'alpha lactalbumine dans le perméat tout en retenant totalement la bêta lactoglobuline. On peut ainsi recueillir à la sortie du module d'ultrafiltration 1 dans la conduite 17 une solution de protéines ne contenant que de l'α-lactalbumine.

Exemple 11

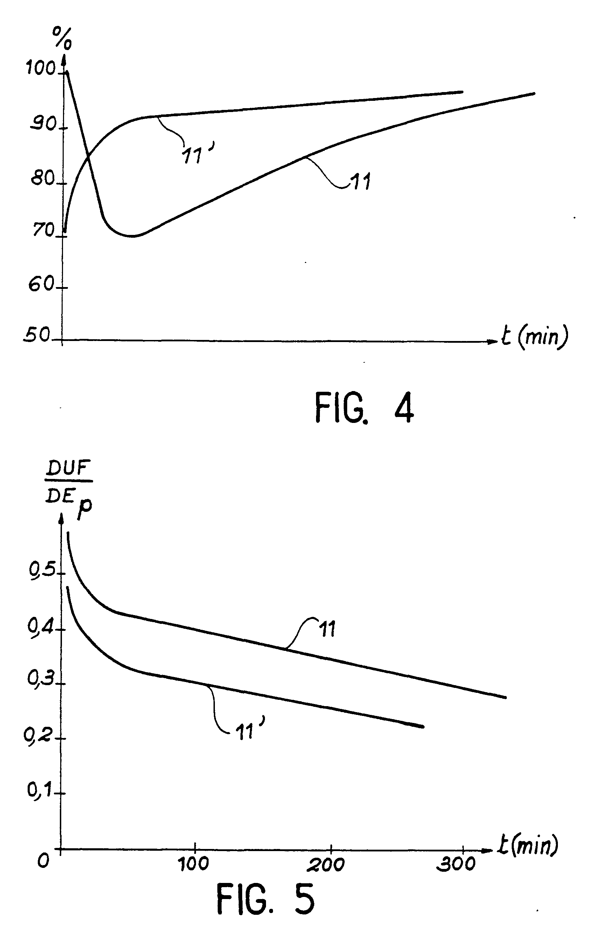

Dans cet exemple, on utilise la membrane obtenue dans l'exemple 7, c'est-à-dire une membrane $M_1$ modifiée par PVI quaternisé pour réaliser l'ultrafiltration du lactosérum doux. On réalise l'ultrafiltration dans les mêmes conditions que celles de l'exemple 8. Les résultats obtenus sont donnés dans le tableau 2 et sur les figures 4 et 5 qui représentent l'évolution du taux de rétention (en %) de l'alpha lactoglobuline (α La) en fonction du temps (en min). Sur cette figure, la courbe 11 se réfère à la membrane $M_1$ modifiée par PVI quaternisé. On remarque ainsi que la courbe a une allure très différente de celles des courbes de la figure 3. En effet, dans le cas de cette membrane, le taux de rétention diminue jusqu'à 70% au début de l'ultrafiltration et il augmente ensuite progressivement jusqu'à une valeur de 90 à 95% qui est comparable aux résultats que l'on obtient avec d'autres membranes. Sur la figure 5, on a représenté l'évolution du rapport de débit d'ultrafiltration DUF (exprimé en $I \cdot h^{-1} \cdot m^{-2}$ sous 4 Bars)/$DE_P$ en fonction du temps (en min) obtenu avec cette membrane et la courbe 11 illustre les variations de ce rapport. On observe ainsi que le débit d'ultrafiltration est élevé.

Après cette opération d'ultrafiltration, on soumet la membrane à un cycle de lavage acide-basique, et on l'utilise à nouveau pour réaliser l'ultrafiltration du lactosérum dans les mêmes conditions que précédemment. Les résultats obtenus sont donnés sur les figures 4 et 5 où les courbes 11' se rapportent aux résultats obtenus après ces lavages. On remarque ainsi que la membrane à alors un comportement différent. L'équilibre du taux de rétention est atteint plus rapidement et l'allure de la courbe 11' correspond à celle des courbes de la figure 3. Le rapport débit d'ultrafiltration DUF/$DE_P$ (débit à l'eau avant ultrafiltration) est plus faible que dans le cas de la membrane de départ alors que le débit à l'eau de la membrane retrouve sa valeur initiale.

Ainsi, on suppose que des constituants non protéiques du lactosérum ont été adsorbés de façon irréversible lors de la première opération d'ultrafiltration réalisée avec cette membrane.

Exemple 12

Dans cet exemple, on utilise le dispositif d'ultrafiltration représenté sur la figure 1 pour traiter des solutions de sérum albumine de boeuf (BSA) à 1 g/l dans du tampon phosphate à pH=7. Dans ces conditions la BSA est chargée négativement comme les protéines alpha et bêta du lactosérum.

On utilise comme membrane, la membrane obtenue dans l'exemple 5 et on réalise l'ultrafiltration dans les mêmes conditions que celles de l'exemple 8. On détermine également les débits d'ultrafiltration et les débits d'eau avant dépôt du polymère, après dépôt du polymère et après ultrafiltration, ainsi que le taux de rejet de la BSA par la membrane.

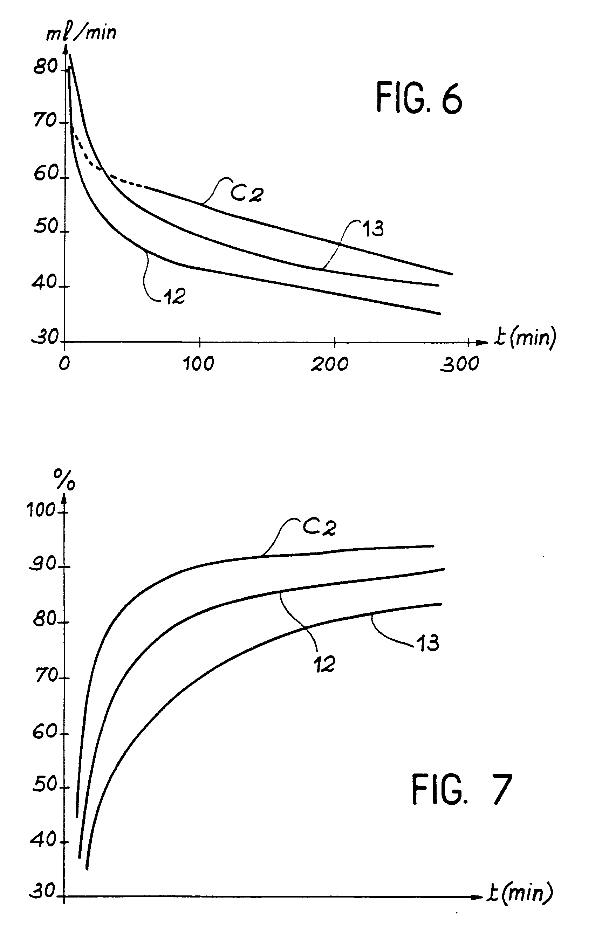

Les résultats obtenus sont donnés dans le tableau 2 et sur les figures 6 et 7 qui représentent respectivement les débits d'ultrafiltration et le taux de rejet en fonction du temps. Sur ces figures, la courbe 12 se rapporte à cet exemple alors que la courbe C2 se rapporte à la membrane $M_1$ d'origine non modifiée par la PVP. Au vu de ces figures, on constate que la présence de PVP améliore le passage de la BSA dans le perméat mais que le débit d'ultrafiltration est plus faible.

Dans le tableau 2 sont rassemblés les résultats obtenus lorsqu'on utilise la membrane $M_1$ non modifiée dans les mêmes conditions (exemple $C_2$).

La quantité de BSA adsorbée sur la membrane a été évaluée à partir d'un essai réalisé avec une solution à 0,3 g/l de BSA. Dans ce cas la quantité de BSA adsorbée sur la membrane $M_1$ modifiée par PVP est de 0,45 g après 600 min d'ultrafiltration alors qu'elle est, dans les mêmes conditions, de 0,75 g pour la membrane $M_1$ non modifiée.

La présence de polymère diminue donc fortement l'adsorption de la protéine BSA.

Exemple 13

Dans cet exemple, on utilise la membrane de l'exemple 6 pour réaliser l'ultrafiltration d'une solution de BSA dans les mêmes conditions que celles de l'exemple 12. Les résultats obtenus sont donnés dans le tableau 2 et sur les figures 6 et 7 où les courbes 13 se rapportent à cet exemple.

Au vu de ces figures, on remarque que le polyvinylimidazole est plus efficace que la polyvinylpyrrolidone pour laisser passer la BSA, et que les débits d'ultrafiltration sont plus élevés avec le PVI qu'avec la PVP.

Exemple 14

Dans cet exemple, on utilise la membrane d'ultrafiltration obtenue dans l'exemple 5 pour réaliser l'ultrafiltration d'une solution de lysozyme à 1 g/l. Cette protéine est une protéine basique (PI=11) qui est chargée positivement dans les conditions expérimentales.

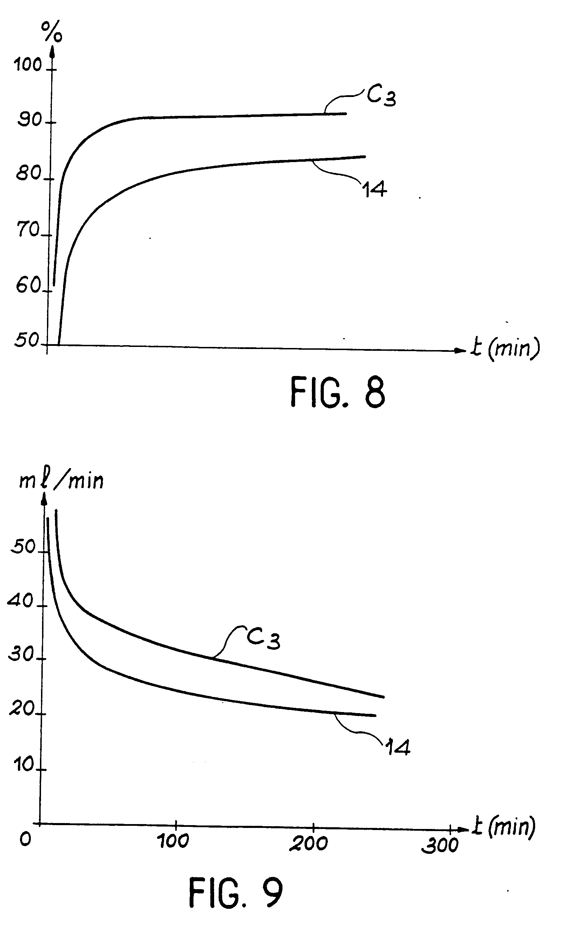

On réalise l'ultrafiltration dans les mêmes conditions que celles de l'exemple 8. Les résultats obtenus sont donnés dans le tableau 2 sur les figures 8 et 9 qui illustrent respectivement le taux de rétention du lysozyme et les débits d'ultrafiltration en fonction du temps. Sur ces figures, les courbes 14 se réfèrent à l'exemple 14 et les courbes C3 se réfèrent aux résultats obtenus dans les mêmes conditions en utilisant une membrane $M_1$ non modifiée. Au vu de ces résultats, on constate que le taux de rétention du lysozyme est abaissé par la présence de PVP et qu'il en est de même du débit d'ultrafiltration.

Exemple 15

Dans cet exemple, on utilise les membranes utilisées dans les exemples 12 et C2 pour l'ultrafiltration d'une solution de BSA comme dans l'exemple 12, et on la soumet, après chaque opération d'ultrafiltration, à des cycles de régénération par lavages au moyen de différents réactifs pour vérifier s'il est possible de retrouver après ces lavages un débit à l'eau des membranes pratiquement identique à celui que l'on obtient lors de la première opération d'ultrafiltration.

Dans ce but, on réalise les opérations de lavage successives suivantes, à la température ambiante:
—stockage dans le d'azoture de sodium,
—lavage par un acide,
—lavage alcalin, et
—lavage à l'eau.

Sur la figure 10, on a représenté le débit à l'eau (en $l \cdot h^{-1} \cdot m^{-2}$) des membranes après ces différentes opérations.

On remarque ainsi que l'on retrouve sensiblement (en 33) le débit à l'eau (32) de la membrane modifiée utilisée pour la première opération d'ultrafiltration. Ainsi, le dépôt de polymère est stable et les protéines n'ont pas été adsorbées sur la membrane de façon irréversible.

Sur la figure 10, on a représenté également les débits à l'eau (en $l \cdot h^{-1} \cdot m^{-2}$) d'une membrane $M_1$ non modifiée par la PVP (exemple C2) après les différentes opérations d'ultrafiltration de BSA, de lavage et de stockage dans l'azoture de sodium.

On remarque que dans ce cas, on ne retrouve pas (en 43) le débit à l'eau (42) de la membrane d'origine. Ainsi, certaines protéines ont été adsorbées dans la membrane $M_1$ de façon irréversible.

Exemple 16

On utilise le mode opératoire de l'exemple 1 pour préparer une membrane d'ultrafiltration $M_1PVIQ25$ dont la couche séparatrice est modifiée par adsorption d'un copolymère de vinylpyrrolidone et de vinylimidazole quaternisé contenant 25% de vinylimidazole.

On utilise ensuite cette membrane modifiée pour réaliser l'ultrafiltration d'une solution de lysozyme à 1 g/l dans du tampon phosphate 0,05 M, puis pour l'ultrafiltration de l'ovalbumine (albumine de l'oeuf) dans le même tampon phosphate, et enfin pour l'ultrafiltration d'une solution d'ovalbumine et de lysozyme dans le même tampon phosphate, en effectuant des lavages et stockages entre les opérations d'ultrafiltration.

Sur la figure 11, on a représenté les débits à l'eau de cette membrane avant adsorption du PVIQ25 et après chacune des opérations d'ultrafiltration et de lavage.

Au vu de cette figure, on remarque que l'on retrouve pratiquement (en 53) le débit à l'eau (52) de la membrane modifiée PVIQ25 et lavée.

Exemple 17

Dans cet exemple, on utilise la membrane d'ultrafiltration $M_1PVIQ$ obtenue dans l'exemple 7, soit une membrane $M_1$ modifiée par adsorption de polyvinylimidazole qui est ensuite quaternisé, pour l'ultrafiltration successive du lysozyme et du lactosérum doux en utilisant respectivement les conditions de l'exemple 8 et en faisant suivre chaque opération d'ultrafiltration par des lavages acide et basique et éventuellement un stockage.

Sur la figure 11, on a représenté les débits à l'eau de cette membrane après les différentes opérations d'ultrafiltration, de lavage et de stockage.

Sur cette figure, on remarque que l'on retrouve (en 63) le débit à l'eau (62) de la membrane d'origine $M_1PVIQ$.

Exemple comparatif 4

Dans cet exemple, on utilise la membrane tubulaire $M_1$ d'origine pour réaliser l'ultrafiltration du lysozyme dans les mêmes conditions que celles de l'exemple 14. Après chaque opération d'ultrafiltration, on soumet la membrane à des lavages acide et basique et éventuellement à un stockage.

Les débits à l'eau de la membrane après chaque opération sont donnés sur la figure 11.

Sur cette figure, on voit que le débit à l'eau (72) de la membrane $M_1$ d'origine décroît constamment au fur et à mesure des opérations d'ultrafiltration alors que dans le cas des exemples 16 et 17 qui utilisent la membrane $M_1$ modifiée conformément à l'invention, les débits à l'eau se maintiennent sensiblement à la même valeur après les différentes opérations d'ultrafiltration et de lavage alcalin et acide.

On remarque ainsi que des protéines ont été adsorbées de façon irréversible sur la membrane $M_1$ non modifiée.

TABLEAU 1

| Ex. | Membrane de dépôt | (PVP) g/l | | | PVP | |
|---|---|---|---|---|---|---|
| | | Solution initiale | Solutions après adsorption | Solutions de rinçage | Quantité adsorbée avant rinçage | Quantité adsorbée après rinçage |
| 1 | $M_1$ (120 cm) | 0,108 | 0,096 | 0,012 | 4,2 mg | 3 mg |
| 2 | $M_1$ (15 cm) | 0,101 | 0,094 | 0,006 | 0,37 mg | 0,19 mg |
| 3 | $M_1$ (15 cm) de l'ex. 2 | 0,102 | 0,094 | 0,013 | 0,33 mg | 0,07 mg |
| 2+3 | | | | | 0,70 mg | 0,26 mg |
| 4 | $M_4$ (120 cm) | 0,098 | 0,099 | — | 6,2 mg | — |

TABLEAU 2

| Proteines | Ex. | Membrane | %R | Permeat | | Debit eau $(l \cdot h^{-1} \cdot m^{-2})$ | | |
|---|---|---|---|---|---|---|---|---|
| | | | | Débit après 200 min $(ml \cdot min^{-1})$ | Pente $(ml \cdot min^{-2})$ | $DE_o$ avant dépôt de polymère | $DE_p$ après dépôt de polymère | $DE_f$ après ultrafiltration |
| Lactoserum doux (20 g/l) | C1 | M1 | 95 | 16 | −0,028 | 389 | — | 84 |
| | 8 | M1+PVP (ex. 5) | 93 | 22 | −0,017 | 675 | 464 | 94 |
| | 9 | M4+PVP (ex. 4) | 100 | 31 | −0,035 | 265 | 221 | 136 |
| | 10 | M1+PVI (ex. 6) | 90 | 23 | −0,017 | 500 | 371 | 105 |
| | 11 | M1+PVIQ (ex. 7) | 87,5 | 22 | −0,037 | 345 | 210 | 59 |
| BSA (1 g/l) | C2 | M1 | 95 | 48 | −0,062 | 552 | — | 175 |
| | 12 | M1+PVP (ex. 5) | 90 | 40 | −0,042 | 572 | 319 | 208 |
| | 13 | M1+PVI (ex. 6) | 83 | 43 | −0,037 | 456 | 342 | 138 |
| Lysozyme (1 g/l) | C3 | M1 | 93 | 27 | −0,058 | 871 | — | 137 |
| | 14 | M1+PVP | 85 | 22 | −0,023 | 600 | 460 | 120 |

**Revendications**

1. Membrane inorganique d'ultrafiltration ou de microfiltration comportant une couche séparatrice en matériau inorganique, caractérisée en ce qu'elle comprend, avant d'être utilisée pour une opération d'ultrafiltration ou de microfiltration, au moins un polymère ou copolymère hydrophile de masse moléculaire au plus égale à $10^5$, adsorbé sur ou dans la couche séparatrice de la membrane inorganique en vue d'en modifier ses propriétés séparatrices.

2. Membrane selon la revendication 1, caractérisée en ce que le polymère ou copolymère hydrophile est un polymère comportant des fonctions amide N-disubstituées.

3. Membrane selon la revendication 2, caractérisée en ce que le polymère ou copolymère comportant des fonctions amide est choisi dans le groupe comprenant la polyvinylpyrrolidone, le polyacrylamide N-disubstitué et le polyméthacrylamide N-disubstitué.

4. Membrane d'ultrafiltration selon la revendication 1, caractérisée en ce que le polymère ou le copolymère hydrophile est un polymère comportant des fonctions amine.

5. Membrane selon la revendication 4, caractérisée en ce que le polymère comportant des fonctions amine est choisi dans le groupe comprenant le polyvinylimidazole, la polyvinylamine et les polyéthylène imines.

6. Membrane selon l'une quelconque des revendications 1 à 5, caractérisée en ce qu'elle est constituée par un support en carbone poreux revêtu d'une couche microporeuse d'oxyde métallique sur ou dans laquelle est adsorbé le polymère ou copolymère hydrophile.

7. Membrane selon l'une quelconque des revendications 1 à 5, caractérisée en ce qu'elle est constituée par un support macroporeux en oxyde métallique revêtu d'une couche microporeuse d'oxyde métallique sur ou dans laquelle est adsorbé le polymère ou copolymère hydrophile.

8. Membrane selon l'une quelconque des revendications 6 et 7, caractérisée en ce que le polymère hydrophile est la polyvinylpyrrolidone ou le polyvinylimidazole.

9. Membrane selon l'une quelconque des revendications 6 à 8, caractérisée en ce que l'oxyde métallique est l'alumine, ou la zircone ou l'oxyde de titane.

10. Procédé de préparation d'une membrane d'ultrafiltration ou de microfiltration selon l'une quelconque des revendications 1 à 9, caractérisé en ce qu'il consiste à mettre en contact la couche séparatrice en matériau inorganique d'une membrane inorganique d'ultrafiltration ou de microfiltration avec une solution d'au moins un polymère ou copolymère hydrophile ayant une masse moléculaire au plus égale à $10^5$, pendant une durée suffisante pour adsorber le polymère ou le copolymère hydrophile sur ou dans la couche séparatrice de la membrane inorganique.

11. Procédé selon la revendication 10, caractérisé en ce que l'on conditionne tout d'abord la membrane inorganique dans un solvant identique à celui qui sera utilisé dans la solution de polymère ou copolymère hydrophile.

12. Procédé selon la revendication 11, caractérisé en ce que le solvant est le méthanol.

13. Procédé pour séparer des protéines présentes dans une solution, caractérisé en ce qu'il consiste à soumettre la solution à une ultrafiltration en utilisant comme membrane d'ultrafiltration la membrane selon l'une quelconque des revendications 1 à 9.

14. Procédé selon la revendication 13, caractérisé en ce que les protéines à séparer sont l'α-lactalbumine et la β-lactoglobuline.

15. Procédé selon la revendication 13, caractérisé en ce que les protéines à séparer sont la sérum albumine de boeuf.

16. Procédé selon la revendication 13, caractérisé en ce que les protéines à séparer sont le lysozyme.

**Patentansprüche**

1. Anorganische Membran zur Ultrafiltration oder zu Mikrofiltration mit einer Trennschicht aus anorganischem Material, dadurch gekennzeichnet, daß sie vor einer Verwendung für einen Ultra- oder Mikrofiltrationsvorgan wenigstens ein hydrophiles Polymer oder Kopolymer mit einer Molekularmasse von höchstens gleich $10^5$ umfaßt, das auf oder in der Trennschicht der anorganischen Membran adsorbiert ist, um ihre Trenneigenschaften zu modifizieren.

2. Membran nach Anspruch 1, dadurch gekennzeichnet, daß das hydrophile Polymer oder Kopolymer ein Polymer mit N-disubstituierten Amidfunktionen ist.

3. Membran nach Anspruch 2, dadurch gekennzeichnet, daß das Polymer oder Kopolymer mit Amidfunktionen aus der Gruppe mit Polyvinylpyrrolidon, dem N-disubstituiertem Polyacrylamid und dem N-disubstituierten Polymethacrylamid ausgewählt wird.

4. Membran nach Anspruch 1, dadurch gekennzeichnet, daß das hydrophile Polymer oder Kopolymer ein Polymer mit Aminfunktionen ist.

5. Membran nach Anspruch 4, dadurch gekennzeichnet, daß das Polymer mit Aminfunktionen aus der Gruppe mit Polyvinylimidazol, Polyvinylamin und den Polyäthyleniminen ausgewählt wird.

6. Membran nach einem der Ansprüche 1 bis 5, dadurch gekennzeichnet, daß sie aus einer porösen Kohlenstoffstütze besteht, die mit einer mikroporösen Schicht eines Metalloxyds überzogen ist, auf oder in der das hydrophile Polymer oder Kopolymer adsorbiert ist.

7. Membran nach einem der Ansprüche 1 bis 5, dadurch gekennzeichnet, daß sie aus einer makroporösen Metalloxydstützte besteht, die mit einer mikroporösen Schicht eines Metalloxyds überzogen ist, auf oder in der das hydrophile Polymer oder Kopolymer adsorbiert ist.

8. Membran nach einem der Ansprüche 6 und 7, dadurch gekennzeichnet, daß das hydrophile Polymer das Polyvinylpyrrolidon oder das Polyvinylimidazol ist.

9. Membran nach einem der Ansprüche 6 bis 8, dadurch gekennzeichnet, daß das Metalloxyd das Aluminiumoxyd, das Zirkoniumoxyd oder das Titanoxyd ist.

10. Verfahren zur Herstellung einer Membran zur Ultrafiltration oder Mikrofiltration nach einem der Ansprüche 1 bis 9, dadurch gekennzeichnet, daß es darin besteht, die Trennschicht aus anorganischem Material einer anorganischen Membran zur Ultrafiltration oder Mikrofiltration mit einer Lösung aus wenigstens einem hydrophilen Polymer oder Kopolymer mit einer Molekularmasse von höchstens $10^5$ über ein Zeitdauer in Berührung zu bringen, die ausreicht, das hydrophile Polymer oder Kopolymer auf oder in der Trennschicht der anorganischen Membran zu adsorbieren.

11. Verfahren nach Anspruch 10, dadurch gekennzeichnet, daß man zunächst die anorganische Membran in einen Lösungsmittel konditionniert, das mit dem identisch ist, das in der Lösung des hydrophilen Polymers oder Kopolymers verwendet wird.

12. Verfahren nach Anspruch 11, dadurch gekennzeichnet, daß das Lösungsmittel Methanol ist.

13. Verfahren zum Trennen von Proteinen in einer Lösung, dadurch gekennzeichnet, daß es darin besteht, die Lösung einer Ultrafiltration unter Verwendung einer Membran zur Ultrafiltration nach einem der Ansprüche 1 bis 9 zu unterwerfen.

14. Verfahren nach Anspruch 13, dadurch gekennzeichnet, daß die zu trennenden Proteine das α-Laktalbumin und das β-Laktoglobulin sind.

15. Verfahren nach Anspruch 13, dadurch gekennzeichnet, daß die zu trennenden Proteine das Abuminserum des Rinds sind.

16. Verfahren nach Anspruch 13, dadurch gekennzeichnet, daß die zu trennenden Proteine das Lysozym sind.

## Claims

1. Inorganic ultrafiltration or microfiltration membrane having an inorganic material separating layer, characterized in that it comprises, prior to use for an ultrafiltration or microfiltration operation, at least one hydrophilic polymer or copolymer with a molecular mass at the most equal to $10^5$, adsorbed on or in the separating layer of the inorganic membrane with a view to modifying the separating properties thereof.

2. Membrane according to claim 1, characterized in that the hydrophilic polymer or copolymer is a polymer having N-disubstituted amide functions.

3. Membrane according to claim 2, characterized in that the polymer or copolymer having amide functions is chosen from the group including polyvinylpyrrolidone, N-disubstituted polyacrylamide and N-disubstituted polymethacrylamide.

4. Ultrafiltration membrane according to claim 1, characterized in that the hydrophilic polymer or copolymer is a polymer having amine functions.

5. Membrane according to claim 4, characterized in that the polymer having amine functions is chosen from the group including polyvinylimidazole, polyvinylamine and polyethyleneimines.

6. Membrane according to any one of the claims 1 to 5, characterized in that it is constituted by a porous carbon support coated with a microporous metal oxide layer on or in which is adsorbed the hydrophilic polymer or copolymer.

7. Membrane according to any one of the claims 1 to 5, characterized in that it is constituted by a macroporous metal oxide support coated with a microporous metal oxide layer on or in which is adsorbed the hydrophilic polymer or copolymer.

8. Membrane according to either of the claims 6 and 7, characterized in that the hydrophilic polymer is polyvinylpyrrolidone or polyvinylimidazole.

9. Membrane according to any one of the claims 6 to 8, characterized in that the metal oxide is alumina or zirconia or titanium dioxide.

10. Process for the preparation of an ultrafiltration or microfiltration membrane according to any one of the claims 1 to 9, characterized in that it comprises contacting the inorganic material separating layer of an inorganic ultrafiltration or microfiltration membrane with a solution of at least one hydrophilic polymer or copolymer with a molecular mass at the most equal to $10^5$ for a time adequate for adsorbing the hydrophilic polymer or copolymer on or in the separating layer of the inorganic membrane.

11. Process according to claim 10, characterized in that the inorganic membrane is firstly conditioned in a solvent identical to that which will be used in the hydrophilic polymer or copolymer solution.

12. Process according to claim 11, characterized in that the solvent is methanol.

13. Process for separating the proteins present in a solution, characterized in that it consists of subjecting the solution to ultrafiltration using as the ultrafiltration membrane the membrane according to any one of the claims 1 to 9.

14. Process according to claim 13, characterized in that the proteins to be separated are α-lactalbumin and β-lactoglobulin.

15. Process according to claim 13, characterized in that the proteins to be separated are bovine serum albumin.

16. Process according to claim 13, characterized in that the proteins to be separated are lysozyme.

FIG. 1

FIG. 2

FIG. 3

2

FIG. 4

FIG. 5

FIG. 6

FIG. 7

FIG. 8

FIG. 9

LAVAGE ACIDE
LAVAGE BASIQUE
STOCKAGE DANS AZOTURE DE Na
ULTRAFILTRATION
IMPREGNATION DE POLYMERE

FIG. 10

FIG. 11